# EUROPEAN PATENT APPLICATION

(11) **EP 4 851 253 A1**
(43) Date of publication of application: **09.12.2026**
(21) Application number: 24937777.1
(22) Date of filing: 16.12.2024
(51) Int. Cl.: C09D 1/00, C09D 7/61

(54) **COMPOSITE COATING, DISPLAY MODULE AND ELECTRONIC DEVICE**

(30) Priority: 30.04.2024 CN 202410547305
(71) Applicant: Honor Device Co., Ltd., Shenzhen, Guangdong 518040 (CN)
(72) Inventor: WANG, Wei, Shenzhen, Guangdong 518040 (CN); XU, Wenbin, Shenzhen, Guangdong 518040 (CN); MIAO, Dengkui, Shenzhen, Guangdong 518040 (CN)
(74) Representative: MERH-IP Matias Erny Reichl Hoffmann Patentanwälte PartG mbB
(86) International application number: PCT/CN2024/139498
(87) International publication number: WO 2025/227750

(57) **Abstract**

This application provides a composite coating, a display module, and an electronic device, relating to the field of technical field of terminals. The composite coating is applied to the electronic device. The electronic device further includes a cover plate, and the composite coating is disposed on a light exit side of the cover plate. The composite coating includes a self-lubricating layer. The self-lubricating layer is attached to the cover plate. A material of the self-lubricating layer includes a compound having a hexagonal layered structure and an inorganic oxide. An equivalent refractive index of the self-lubricating layer ranges from 1.3 to 1.8. Therefore, while ensuring a stable binding force between the composite coating and the cover plate, the self-lubricating layer further improves friction resistance of the composite coating, and can effectively reduce failure speed and time of the composite coating, thereby achieving effective long-term protection for the high-wear-resistant cover plate.

## Description

This application claims priority to Chinese Patent Application No. 202410547305.8, filed with the China National Intellectual Property Administration on April 30, 2024 and entitled "COMPOSITE COATING, DISPLAY MODULE, AND ELECTRONIC DEVICE", which is incorporated herein by reference in its entirety.

### TECHNICAL FIELD

This application relates to the field of technical field of terminals, and in particular, to a composite coating, a display module, and an electronic device.

### BACKGROUND

With popularization of touchscreen electronic devices, consumers have increasingly higher requirements on the electronic devices. When users perform operations such as touching and tapping on a screen of a touchscreen electronic device, traces such as scratches are easily left on a surface of cover plate glass above the screen. To protect the cover plate glass as few as possible from scratches, an anti-fingerprint (anti-fingerprint, AF) layer is usually attached to the cover plate glass, to protect the screen.

However, during use of the electronic device, the AF layer is usually in contact with the user's hands, face and other parts, and is easy to be contaminated with fingerprints and grease. These may cause failure of the AF layer after a period of use, severely affecting performance of the electronic device.

### SUMMARY

This application provides a composite coating, a display module, and an electronic device. A self-lubricating layer in the composite coating includes a compound having a hexagonal layered structure and an inorganic oxide. In this way, the self-lubricating layer not only can bear an anti-fingerprint layer and a cover plate, but also effectively improves friction resistance of the composite coating while ensuring stable binding between the composite coating and the cover plate, thereby implementing effective long-term protection for the cover plate and improving performance of the electronic device.

To achieve the foregoing objective, the following technical solutions are used in this application.

In a first aspect, a composite coating applied to an electronic device is provided. The electronic device further includes a cover plate. The composite coating is disposed on a light exit side of the cover plate. The composite coating includes a self-lubricating layer. The self-lubricating layer is attached to the cover plate. A material of the self-lubricating layer includes a compound having a hexagonal layered structure and an inorganic oxide. An equivalent refractive index of the self-lubricating layer ranges from 1.3 to 1.8.

According to the composite coating provided in an embodiment of this application, the compound having a hexagonal layered structure and the inorganic oxide together form the self-lubricating layer. Based on the fact that the inorganic oxide enables the self-lubricating layer to stably bear an anti-fingerprint layer and the cover plate, when a friction force is applied to the composite coating, a very small part of the compound having a hexagonal layered structure is decomposed during the rubbing process, and a chemisorbed film is formed at a rubbing interface between the self-lubricating layer and the anti-fingerprint layer, thereby improving friction resistance at the interface. Especially when the user rubs along a palm direction, the friction is lower. Therefore, the friction resistance of the anti-fingerprint layer is improved, that is, the friction resistance of the composite coating is improved, and the failure speed and time of the composite coating are reduced. Moreover, the display is not affected, and the electronic device has good performance.

In a possible implementation of the first aspect, the composite coating includes an underlayer, and a self-lubricating layer and an anti-fingerprint layer that are successively stacked on the underlayer. The self-lubricating layer binds to the cover plate through the underlayer, and the self-lubricating layer is formed by mixing the compound having a hexagonal layered structure and the inorganic oxide.

In this implementation, the compound having a hexagonal layered structure and the inorganic oxide are uniformly mixed to form the self-lubricating layer. Based on the fact that the inorganic oxide enables the self-lubricating layer to stably bear the anti-fingerprint layer and the cover plate and that the self-lubricating layer well binds to the cover plate through the underlayer, when a friction force is applied to the composite coating, a very small part of the compound having a hexagonal layered structure is decomposed during the rubbing process, and a chemisorbed film is formed at a rubbing interface between the self-lubricating layer and the anti-fingerprint layer, thereby improving friction resistance at the interface. Especially when the user rubs along a palm direction, the friction is lower. Therefore, the friction resistance of the composite coating is improved, and the failure speed and time of the composite coating are reduced. Moreover, the display is not affected.

In a possible implementation of the first aspect, when the compound having a hexagonal layered structure and the inorganic oxide are mixed to form the self-lubricating layer, a volume fraction of the compound having a hexagonal layered structure in the material of the self-lubricating layer ranges from 1% to 60%.

In this implementation, the self-lubricating layer contains a certain proportion of inorganic oxide. Therefore, when the self-lubricating layer is well attached to other film layers, as the proportion of the compound having a hexagonal layered structure in the material of the self-lubricating layer increases, the dynamic friction coefficient of the composite coating is smaller, so that the composite coating has better friction resistance.

In a possible implementation of the first aspect, when the compound having a hexagonal layered structure and the inorganic oxide are mixed to obtain the self-lubricating layer, the equivalent refractive index of the mixture of the compound having a hexagonal layered structure and the inorganic oxide ranges from 1.3 to 1.8.

In this implementation, when the composite coating is applied to a transparent glass cover plate, the combination of the composite coating and the transparent glass cover plate can present a transparent effect, and normal display of the display screen is not affected.

In a possible implementation of the first aspect, the composite coating is configured such that a transmittance of light that is emitted from the display screen and sequentially passes through the cover plate and the composite coating is greater than 90.5%.

In this implementation, the composite coating does not affect the display effect of the display screen.

In a possible implementation of the first aspect, a thickness of the underlayer along a direction perpendicular to the cover plate may range from 5 nm to 50 nm.

In this implementation, the underlayer can improve the binding force between the cover plate and other film layers above, and is not excessively thick, thereby preventing the composite coating from being excessively thick.

In a possible implementation of the first aspect, a thickness of the self-lubricating layer along the direction perpendicular to the cover plate may range from 5 nm to 50 nm.

In this implementation, the self-lubricating layer is not excessively thick, thereby preventing the composite coating from being excessively thick.

In a possible implementation of the first aspect, a thickness of the anti-fingerprint layer along the direction perpendicular to the cover plate may range from 10 nm to 60 nm.

In this implementation, the anti-fingerprint layer is not excessively thick, thereby preventing the composite coating from being excessively thick.

In a possible implementation of the first aspect, the composite coating includes an underlayer, and a self-lubricating layer and an anti-fingerprint layer that are successively stacked on the underlayer. The self-lubricating layer binds to the cover plate through the underlayer, and the self-lubricating layer includes at least two sub-lubricating layers, namely a first sub-lubricating layer and a second sub-lubricating layer that are successively stacked on the underlayer.

In this implementation, based on the fact that the first sub-self-lubricating layer well binds to the underlayer and then well binds to the cover plate through the underlayer and that a very small part of the compound having a hexagonal layered structure in the first sub-lubricating layer and/or the second sub-self-lubricating layer is decomposed during the rubbing process such that the chemisorbed film is formed at the rubbing interface between the self-lubricating layer and the AF layer, the friction resistance at the interface is improved. Especially when the user rubs along a palm direction, the friction resistance is stronger, and the failure speed and time of the composite coating are reduced. Moreover, the display is not affected. Therefore, the service life of the electronic device is effectively prolonged, and the performance of the electronic device is improved.

In a possible implementation of the first aspect, a material of the first sub-lubricating layer is the inorganic oxide, or a mixture of the compound having a hexagonal layered structure and the inorganic oxide, and a material of the second sub-lubricating layer is the compound having a hexagonal layered structure, or a mixture of the compound having a hexagonal layered structure and the inorganic oxide.

In this implementation, based on the fact that the first sub-self-lubricating layer well binds to the underlayer and then well binds to the cover plate through the underlayer and that a very small part of the compound having a hexagonal layered structure in the first sub-lubricating layer and/or the second sub-self-lubricating layer is decomposed during the rubbing process such that the chemisorbed film is formed at the rubbing interface between the self-lubricating layer and the AF layer, the friction resistance at the interface is improved. Especially when the user rubs along a palm direction, the friction resistance is stronger, and the failure speed and time of the composite coating are reduced. Moreover, the display is not affected. Therefore, the service life of the electronic device is effectively prolonged, and the performance of the electronic device is improved.

In a possible implementation of the first aspect, a thickness of the first sub-lubricating layer ranges from 0.1 nm to 30 nm.

In this implementation, the first sub-lubricating layer has a small thickness, thereby reducing the risk of peeling of the first sub-lubricating layer.

In a possible implementation of the first aspect, a thickness of the second sub-lubricating layer ranges from 0.1 nm to 50 nm.

In this implementation, the second sub-lubricating layer has a small thickness, thereby reducing the risk of peeling of the second sub-lubricating layer.

In a possible implementation of the first aspect, the equivalent refractive indexes of the first sub-lubricating layer and the second sub-lubricating layer each range from 1.2 to 1.9.

In this implementation, when the composite coating is applied to a transparent glass cover plate, the combination of the composite coating and the transparent glass cover plate can present a transparent effect, and normal display of the display screen is not affected.

In a possible implementation of the first aspect, the composite coating includes an underlayer, and a self-lubricating layer and an anti-fingerprint layer that are successively stacked on the underlayer. The self-lubricating layer binds to the cover plate through the underlayer, and the self-lubricating layer includes at least four sub-lubricating layers, namely a first sub-lubricating layer, a second sub-lubricating layer, a third sub-lubricating layer, and a fourth sub-lubricating layer that are successively stacked on the underlayer. A material of the first sub-lubricating layer is the inorganic oxide, or a mixture of the compound having a hexagonal layered structure and the inorganic oxide, and materials of the second sub-lubricating layer, the third sub-lubricating layer, and the fourth sub-lubricating layer may each be any one of the inorganic oxide, the compound having a hexagonal layered structure, or the mixture of the compound having a hexagonal layered structure and the inorganic oxide.

In this implementation, based on the fact that the first sub-self-lubricating layer well binds to the underlayer and then well binds to the cover plate through the underlayer and that the three or more film layers form a stacked structure with a certain period, the sub-self-lubricating layers each have a small thickness and do not peel off, and the self-lubricating layer of the lamination can significantly improve the friction resistance of the composite coating, so that the failure speed and time of the composite coating are reduced. Moreover, the display is not affected. Therefore, the service life of the electronic device is effectively prolonged, and the performance of the electronic device is improved.

In a possible implementation of the first aspect, the composite coating includes an underlayer, and a scratch-resistant layer, a self-lubricating layer, and an anti-fingerprint layer that are successively stacked on the underlayer. The self-lubricating layer binds to the cover plate through the underlayer, and the self-lubricating layer is formed by mixing the compound having a hexagonal layered structure and the inorganic oxide.

In this implementation, the self-lubricating layer improves the friction resistance of the composite coating and reduces the failure speed and time of the composite coating without affecting the display. On this basis, because the scratch-resistant layer can improve the hardness of the composite coating, the composite coating has stronger scoring resistance and excellent anti-puncture and scratch-resistant performance after contacting a hard object, thereby further improving the performance of the composite coating.

In a possible implementation of the first aspect, the composite coating includes an underlayer, and a scratch-resistant layer, a self-lubricating layer, and an anti-fingerprint layer that are successively stacked on the underlayer. The self-lubricating layer binds to the cover plate through the underlayer, and the self-lubricating layer includes at least two sub-lubricating layers, namely a first sub-lubricating layer and a second sub-lubricating layer that are successively stacked on the underlayer.

In this implementation, the self-lubricating layer improves the friction resistance of the composite coating and reduces the failure speed and time of the composite coating without affecting the display. On this basis, because the scratch-resistant layer can improve the hardness of the composite coating, the composite coating has stronger scoring resistance and excellent anti-puncture and scratch-resistant performance after contacting a hard object, thereby further improving the performance of the composite coating.

In a possible implementation of the first aspect, a dynamic friction coefficient of the composite coating is less than or equal to 0.03.

In this implementation, the self-lubricating layer improves the friction resistance of the composite coating and reduces the failure speed and time of the composite coating.

In a possible implementation of the first aspect, the compound having a hexagonal layered structure includes diamond-like carbon.

In this implementation, the diamond-like carbon is a mixed phase including a regular tetrahedral structure of diamond and a hexagonal layered structure of graphite. When the hexagonal layered structure of graphite undergoes a friction force, in a direction along a palm surface of the user, the binding force between different atoms in the compound having a hexagonal layered structure is relatively strong, and in a direction perpendicular to the palm surface of the user, the binding force between different atoms in the compound having a hexagonal layered structure is very weak. In this case, a very small part of the compound having a hexagonal layered structure is decomposed during the rubbing process, and a corresponding chemisorbed film is formed at a rubbing interface of the self-lubricating layer close to the AF layer. The chemisorbed film can improve the wear resistance at the interface.

In a possible implementation of the first aspect, the compound having a hexagonal layered structure includes a rare earth fluoride having a hexagonal layered structure. The rare earth fluoride having a hexagonal layered structure includes lanthanum trifluoride having a hexagonal layered structure, cerium trifluoride having a hexagonal layered structure, yttrium fluoride having a hexagonal layered structure, and uranium trifluoride having a hexagonal layered structure.

In this implementation, the rare earth fluoride exhibits various structures, such as ionic crystal structure, polycrystalline structure, and hexagonal layered structure. When the rare earth fluoride having a hexagonal layered structure undergoes a friction force, in a direction along a palm surface of the user, the binding force between different atoms in the compound having a hexagonal layered structure is relatively strong, and in a direction perpendicular to the palm surface of the user, the binding force between different atoms in the compound having a hexagonal layered structure is very weak. In this case, a very small part of the compound having a hexagonal layered structure is decomposed during the rubbing process, and a corresponding chemisorbed film is formed at a rubbing interface of the self-lubricating layer close to the AF layer. The chemisorbed film can improve the wear resistance at the interface.

In a possible implementation of the first aspect, a refractive index of the compound having a hexagonal layered structure ranges from 1.55 to 1.62, and a melting point of the compound having a hexagonal layered structure is greater than 1400°C.

In this implementation, the film layer formed by the compound having a hexagonal layered structure does not affect the display effect, and has a high melting point, so that the composite coating exhibits good chemical inertness and strong resistance to acid and alkali corrosion.

In a possible implementation of the first aspect, two targets are provided. One target contains the compound having a hexagonal layered structure, and the other target contains the inorganic oxide. The self-lubricating layer is formed by magnetron sputtering using the two targets.

This implementation is simple and easy to implement.

In a second aspect, an electronic device is provided, including a display screen, a cover plate, and the composite coating according to the first aspect or any possible implementation of the first aspect. The cover plate is disposed on the light exit side of the display screen, and the composite coating is disposed on one side of the cover plate away from the display screen.

According to the electronic device provided in the embodiments of this application, the composite coating in the electronic device can be prevented from failure for a long time, thereby improving the smooth and comfortable tactile experience of the user.

In a possible implementation of the second aspect, the composite coating is configured such that a transmittance of light that is emitted from the display screen and sequentially passes through the cover plate and the composite coating is greater than 90.5%.

In this implementation, the composite coating does not affect he display effect.

According to the composite coating provided in the embodiments of this application, when the composite coating is applied to a cover plate, the self-lubricating layer in the composite coating can bind to the cover plate and bear the cover plate and the anti-fingerprint layer. When a friction force is applied, a very small part of the compound having a hexagonal layered structure in the self-lubricating layer is decomposed, and the chemisorbed film is formed at the rubbing interface between the self-lubricating layer and the anti-fingerprint layer, thereby improving friction resistance at the interface. Especially when the user rubs along a palm direction, the friction is lower. Therefore, the friction resistance of the composite coating is improved, and the failure speed and time of the composite coating are reduced. Moreover, the display is not affected.

### BRIEF DESCRIPTION OF DRAWINGS

FIG. 1 is a schematic overall structural diagram of an electronic device according to an embodiment of this application;
FIG. 2 is a schematic exploded structural diagram of the electronic device in FIG. 1;
FIG. 3 is a schematic structural diagram of a display screen and a cover plate in the conventional technology;
FIG. 4 is a schematic structural diagram of a display screen, a cover plate, and a protection layer in the conventional technology;
FIG. 5 is a schematic structural diagram of another display screen, a cover plate, and a protection layer in the conventional technology;
FIG. 6 is a schematic structural diagram of a first composite coating according to an embodiment of this application;
FIG. 7 is a schematic structural diagram of a second composite coating according to an embodiment of this application;
FIG. 8 is a schematic structural diagram of a third composite coating according to an embodiment of this application;
FIG. 9 is a schematic structural diagram of a fourth composite coating according to an embodiment of this application;
FIG. 10 is a schematic structural diagram of a fifth composite coating according to an embodiment of this application;
FIG. 11 is a schematic structural diagram of a sixth composite coating according to an embodiment of this application;
FIG. 12 is a schematic diagram of a cross-cut test classified as 3 mm ≤ ink width < 12 mm according to an embodiment of this application;
FIG. 13 is a schematic diagram of another cross-cut test classified as 3 mm ≤ ink width < 12 mm according to an embodiment of this application;
FIG. 14 is a schematic diagram of a cross-cut test classified as 1 mm ≤ ink width < 3 mm according to an embodiment of this application; and
FIG. 15 is a schematic diagram of another cross-cut test classified as 1 mm ≤ ink width < 3 mm according to an embodiment of this application.

### Reference numerals:

01-mobile phone; 100-display screen; 101-middle frame; 102-rear housing; 103-circuit board assembly; 1031-main circuit board; 1032-electronic element; 104-battery; 105-cover plate; 20-underlayer;
02-composite coating; 3-AF layer; 4-scratch-resistant layer; 5-self-lubricating layer; 51-first sub-lubricating layer; 52-second sub-lubricating layer; 53-third sub-lubricating layer; and 54-fourth sub-lubricating layer.

### DESCRIPTION OF EMBODIMENTS

The following clearly and thoroughly describes technical solutions in embodiments of this application with reference to the accompanying drawings. In the descriptions of embodiments of this application, unless otherwise specified, "/" represents "or". For example, A/B may represent A or B. In this specification, "and/or" is merely an association relationship for describing associated objects, and represents that three relationships may exist. For example, A and/or B may represent the following three cases: Only A exists, both A and B exist, and only B exists.

The terms "first" and "second" below are used for descriptive purposes only, and cannot be construed as implying or implying relative importance or implicitly indicating the quantity of technical features indicated. Therefore, a feature defined by "first" or "second" may explicitly or implicitly include one or more features. In the description of the embodiments of this application, unless otherwise stated, "a plurality of" refers to two or more. "At least one" means one or more.

First, some terms in the embodiments of this application are explained and described, so that a person skilled in the art can better understand the terms.

### 1. AF layer

The AF layer uses a special coating material. This coating material can effectively absorb grease and perspiration left by the fingerprints, causing very weak traces left by the fingerprints. In addition, this coating material can also prevent the fingerprint traces from being detected and replicated by others, thereby improving security and accuracy of fingerprint recognition.

### 2. Mohs hardness

The Mohs hardness is a standard for measuring material hardness. It involves using a pyramid-shaped diamond needle to scratch the surface of the test material and measuring the depth of the resulting scratch based on the scratch method. The depth of this scratch corresponds to the Mohs hardness.

### 3. Vickers hardness

The Vickers hardness is a standard for representing material hardness. It involves pressing a diamond pyramid indenter with an included angle between relative surfaces being 136° into a surface of a tested material under a specified load, removing the load after holding the load for a specified time, measuring the diagonal length of the indentation, and further calculating the surface area of indentation. Finally, the obtained average pressure on the surface area of indentation is a Vickers hardness value of the tested material, denoted by the symbol HV.

### 4. Hexagonal crystal system

The hexagonal crystal system refers to a crystal structure that has six prismatic faces, and each prismatic face is formed by two bottom faces and six side faces. The layered structure of the hexagonal crystal system is formed by repeated packing along the direction of the c axis of the unit cell. Atoms in each layer are arranged along a hexagonal path, to form a planar six-member ring structure.

### 5. Dynamic friction coefficient

The dynamic friction coefficient is the ratio of the friction force to the positive pressure when two objects in contact move relative to each other. When the objects are in horizontal motion, the positive pressure is equal to the gravity. Objects of different materials have different dynamic friction coefficients. A coarser object indicates a larger dynamic friction coefficient.

Terms involved in the embodiments of this application are briefly described above, and details are not described below again.

The type of the electronic device is not specifically limited in the embodiments of this application. In some embodiments, the electronic device of this application may include a mobile phone, a wearable device (such as a smart bracelet, a smart watch, or a headset), a tablet computer, a laptop (laptop), a handheld computer, a notebook computer, an ultra-mobile personal computer (ultra-mobile personal computer, UMPC), a cellular phone, a personal digital assistant (personal digital assistant, PDA), an augmented reality (Augmented reality, AR)/virtual reality (virtual reality, VR) device, another Internet of things (internet of things, IOT) device, an in-vehicle electronic device, and the like, and may alternatively be a device such as a television, a large screen, a printer, or a projector.

The specific form of the electronic device is not specially limited in the embodiments of this application. For ease of description, an example where the electronic device is a mobile phone is used for description below.

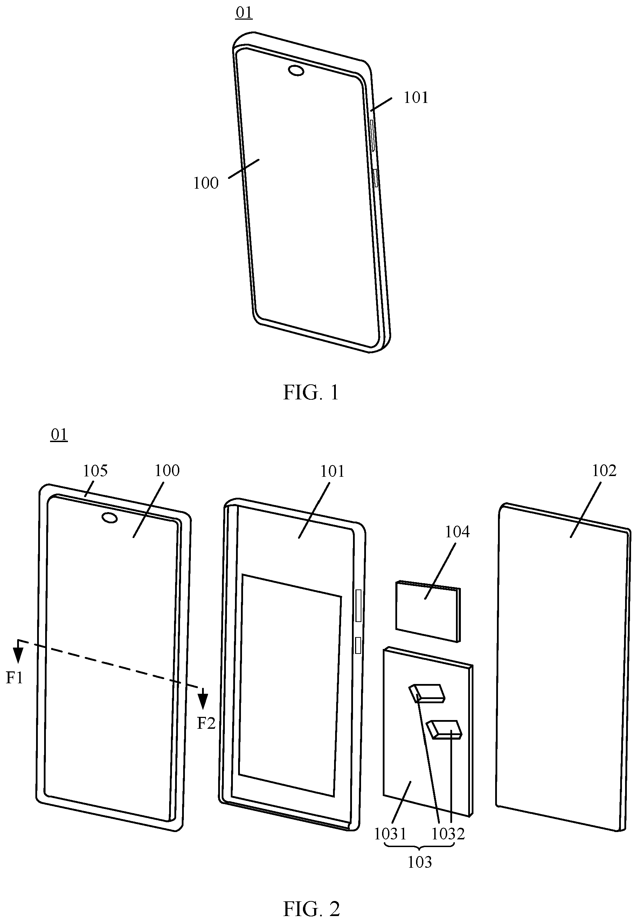

Referring to FIG. 1 and FIG. 2, FIG. 1 is a schematic overall diagram of a mobile phone 01 according to some embodiments of this application, and FIG. 2 is a schematic exploded diagram of the mobile phone 01 in FIG. 1. The mobile phone 01 shown in FIG. 1 and FIG. 2 is described using a phablet as an example. In other embodiments, the mobile phone may alternatively be a mobile phone of another type, for example, a foldable mobile phone.

In the example in FIG. 1 and FIG. 2, the mobile phone 01 may include a display screen 100, a middle frame 101, a rear housing 102, a circuit board assembly 103, a battery 104, and the like. It may be understood that FIG. 1, FIG. 2, and the following related drawings only schematically show some components included in the mobile phone 01, and actual shapes, actual sizes, actual positions, and actual structures of the components are not limited by FIG. 1, FIG. 2, and the following drawings.

As shown in FIG. 1 and FIG. 2, the display screen 100 in the mobile phone 01 is located on one side of the middle frame 101. In application, the display screen 100 may be configured to display an image, a video, and the like. The display screen 100 may be any one of a liquid crystal display (liquid crystal display, LCD), an organic light emitting diode (organic light emitting diode, OLED) display, a mini light emitting diode (mini light emitting diode, Mini LED) display, a micro light emitting diode (micro light emitting diode, Micro LED) display, and the like.

In addition, the display screen 100 may be a foldable screen, specifically subject to actual application.

Referring to FIG. 2, the rear housing 102 of the mobile phone 01 is disposed on one side of the middle frame 101 away from the display screen 100, and an internal accommodating space of the mobile phone 01 is formed between the rear housing 102 and the middle frame 101. The internal accommodating space accommodates the circuit board assembly 103, the battery 104, and the like. The battery 104 may be configured to provide power to structures such as the display screen 100 and the circuit board assembly 103 in the mobile phone 01.

As shown in FIG. 2, the circuit board assembly 103 includes a main circuit board 1031, electronic elements 1032, and the like. The main circuit board 1031 may be configured to carry the electronic elements 1032 and complete signal interaction with the electronic elements 1032. FIG. 2 is described using an example where the circuit board assembly 103 includes two electronic elements 1032. Certainly, the quantity of the electronic elements 1032 may not be limited to two, specifically subject to actual application. In application, the main circuit board 1031 may printed circuit boards (printed circuit boards, PCB), a flexible printed circuit (flexible printed circuit, FPC), and the like. The electronic element 1032 may include, but is not limited to, a chip, a resistor, a capacitor, an inductor, a potentiometer, an electron tube, a heat sink, an electromechanical component, a connector, a semiconductor discrete device, a sensor, a power supply, a switch, a small and special electrical machine, an electronic transformer, a relay, a subscriber identity module (subscriber identity module, SIM) card holder, and the like.

Referring to FIG. 2, the mobile phone 01 further includes a cover plate 105. The cover plate 105 may be stacked on the display screen 100, and is mainly configured to protect and protect against dust for the display screen 100. The cover plate 105 may be fixed to the frame.

In actual application, a material of the cover plate may include glass, for example, common glass or another glass. The another glass herein is a type of glass that has a special material, function, and the like and that is different from the common glass. Because the cover plate 105 directly covers the display screen 100, in order not to affect the normal display of the display screen 100, further, the material of the cover plate 105 may include transparent glass. In this case, the cover plate 105 is a transparent glass cover plate.

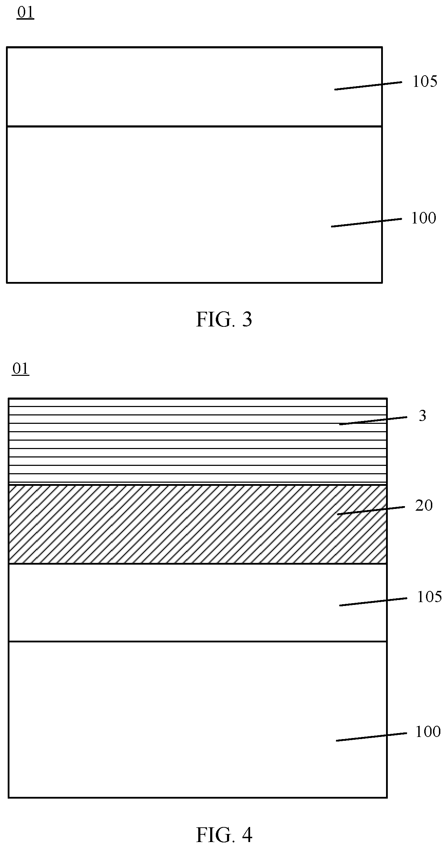

The display screen 100 and the cover plate 105 in FIG. 2 are cut along F1F2, to obtain a sectional view of the display screen 100 and the cover plate 105 shown in FIG. 3.

In the conventional technology, if no protection layer is attached to the cover plate 105, visible scratches will appear on the cover plate 105 in a short time, causing scratches on the cover plate 105. Moreover, as time goes, there will be more and more scratches on the mobile phone. This not only affects the aesthetic appearance of the mobile phone, but also destroys the stress balance of the cover plate 105, causing a decline in the impact resistance of the cover plate 105. Therefore, a protection layer is generally attached to the surface of the cover plate 105, so as to prevent the cover plate 105 from being scored, scuffed, broken, or the like.

In application, an outermost protection layer is usually an AF layer. With the development of smart phones, touchscreen display technologies, and the like, a user needs to be in direct contact with a display screen of a mobile phone. Therefore, during use, the AF layer may be in contact with the user's hands, face and other parts, causing the AF layer to be contaminated with fingerprints, grease, and the like. These not only cause an unappealing appearance of the surface of the mobile phone, but also may cause a failure of the protection layer. This failure not only makes fingerprints difficult to wipe off but also reduces the smooth and comfortable tactile experience of the user.

Currently, failure speeds of the AF layer are different in different products and different application scenarios. For example, for the cover plate 105, generally, in a scenario such as common chatting and typewriting, the failure period of the AF layer may be approximately three months. However, in a scenario involving heavy gaming usage, accelerated wear occurs in the fixed area of the cover plate 105, potentially leading to localized failure of the AF layer within approximately one month.

To solve the foregoing problem, as an example, FIG. 4 shows a schematic structural diagram of a cover plate 105 provided with a protection layer in the conventional technology.

As shown in FIG. 4, the mobile phone 01 includes: a display screen 100, and a cover plate 105, an underlayer 20, and an AF layer 3 that are successively stacked on the display screen 100. The cover plate 105 here is a common glass cover plate, and the underlayer 20 may be formed in a manner such as electron beam evaporation, silicon target sputtering, or thick film deposition.

Due to its glass structure and composition similar to glass, SiO₂ and the like can be better attached to a common glass cover plate and has a strong binding force with the common glass cover plate. Therefore, a material of the underlayer 20 may include SiO₂ and the like.

Advantages of the structure of FIG. 4 are as follows: The AF layer 3 has a good anti-fingerprint effect and high smoothness; and the underlayer 20 and the AF layer 3 belong to an optical film system and do not absorb visible light, so that the transmittance of the protective film may be greater than 91%, and the display of the display screen 100 is not affected.

In actual application, a material of the AF layer may include structures such as perfluoropolyether siloxanes with an anti-fingerprint effect.

Disadvantages of the structure of FIG. 4 are as follows: During the rubbing process, the wear resistance of the AF layer 3 is strongly relied on, but the AF layer 3 has poor friction resistance, leading to potential failure of the AF layer 3 due to friction wear after approximately three months of normal use. This rapid failure renders it incapable of effectively protecting the common glass cover plate and even the display screen 100.

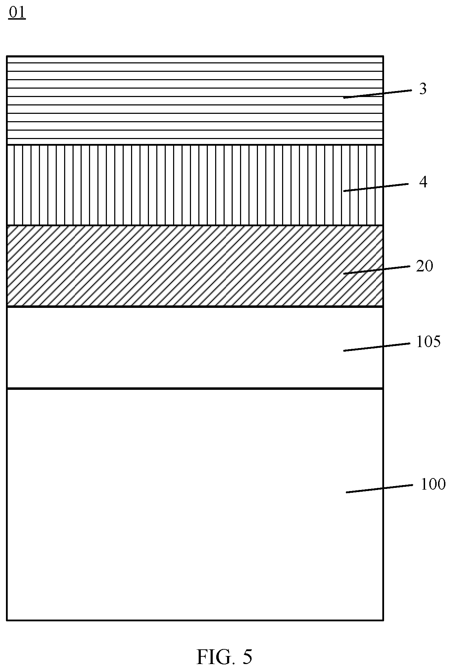

As another example, FIG. 5 shows a schematic structural diagram of another cover plate 105 provided with a protection layer in the conventional technology.

FIG. 5 is different from FIG. 4 in that: based on FIG. 4, the mobile phone 01 in FIG. 5 further includes a scratch-resistant layer 4, the scratch-resistant layer 4 is disposed between the underlayer 20 and the AF layer 3, and the cover plate 105 here is another glass cover plate other than a common glass cover plate. It should be noted that the another glass cover plate is a glass cover plate different from a common glass cover plate and having a special material and function. For example, the another glass cover plate is a glass cover plate having a surface roughness approximately three times to five times higher than that of a common glass cover plate and having features such as a high-density structure.

Advantages of the structure of FIG. 5 are as follows: The scratch resistance and drop durability of the mobile phone 01 are improved.

Disadvantages of the structure of FIG. 5 are as follows: After a surface of the another glass cover plate is thickly coated with the scratch-resistant layer 4, the properties of the another glass cover plate lead to a decrease in the binding force between the another glass cover plate and the AF layer 3, so that the AF layer 3 is more prone to wear and failure during use. That is, the failure speed is higher. For example, the failure may occur within less than about one month. Consequently, the another glass cover plate and even the display screen 100 cannot be effectively protected.

It can be known based on the foregoing descriptions that, the protection layer provided in the conventional technology cannot reduce the failure speed of the AF layer, and nor can achieve good wear resistance and scratch resistance/drop durability. Consequently, the cover plate cannot be effectively protected, affecting the performance of the electronic device.

Only content related to the invention is described above. The remaining content may be obtained by referring to the conventional technology, and details are not described herein again.

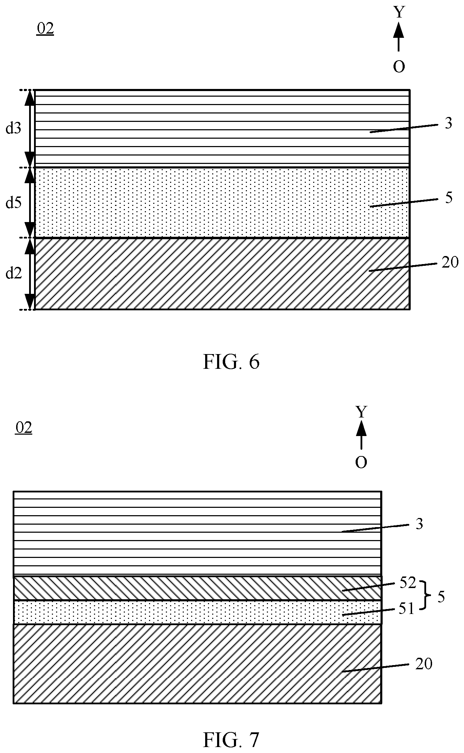

The composite coating 02 having various structures provided by the embodiments of this application will be introduced in detail with reference to FIG. 6 to FIG. 11.

### I. First case

### Embodiment 1 (referring to FIG. 6):

As shown in FIG. 6, the composite coating 02 provided in this embodiment of this application is disposed on a cover plate of a display screen of an electronic device. The composite coating 02 includes: an underlayer 20, and a self-lubricating layer 5 and an AF layer 3 that are successively stacked on the underlayer 20. The self-lubricating layer 5 is attached to the cover plate through the underlayer 20. The self-lubricating layer 5 is formed by mixing a compound having a hexagonal layered structure and an inorganic oxide.

In actual application, in an example of a rare earth fluoride, the rare earth fluoride exhibits various structures, for example, a hexagonal layered structure and a tetragonal layered structure. The rare earth fluoride having a tetragonal layered structure is usually hard and often used as a material of a scratch-resistant layer. Therefore, when the scratch-resistant layer formed by the rare earth fluoride having a tetragonal layered structure is disposed on the cover plate, the scratch-resistant, anti-puncture, and anti-scoring performance can be improved.

The rare earth fluoride having a hexagonal layered structure has layered lubrication properties, and has weak interlayer forces and strong intralayer atomic forces (primarily van der Waals forces, as well as some hydrogen bonding). This endows the rare earth fluoride having a hexagonal layered structure with distinct characteristics, such as a refractive index of 1.55 to 1.62 and a melting point of greater than 1400°C. Exemplarily, a refractive index of the rare earth fluoride having a hexagonal layered structure may be 1.55, 1.56, 1.58, 1.60, 1.61, 1.62, or the like, and a melting point of the rare earth fluoride having a hexagonal layered structure may be 1450°C, 1500°C, 1600°C, 1800°C, 200°C, 2400°C, or the like. Therefore, the refractive index of the rare earth fluoride having a hexagonal layered structure can enable a film layer formed by the rare earth fluoride to have a high transmittance and further to exhibit good transparency when cooperating with a transparent glass cover plate, thereby avoiding affecting the normal display of the display screen. The rare earth fluoride having a hexagonal layered structure has a high melting point, and can enable the composite coating to exhibit good chemical inertness and strong resistance to acid and alkali corrosion.

It should be noted that the transparent glass cover plate is disposed on the display screen, light emitted from the display screen enters the composite coating 02 after passing through the transparent glass cover plate, and one side of the transparent glass cover plate away from the display screen is the light exit side.

Therefore, when the user applies a friction force to the composite coating 02 in FIG. 6, the rare earth fluoride having a hexagonal layered structure in the self-lubricating layer 5 undergoes this friction force. In a direction along a palm surface of the user, the binding force between different atoms in the rare earth fluoride having a hexagonal layered structure is relatively strong, and in a direction perpendicular to the palm surface of the user, the binding force between different atoms in the rare earth fluoride having a hexagonal layered structure is very weak. In this case, a very small part of the rare earth fluoride having a hexagonal layered structure is decomposed during the rubbing process, and a corresponding chemisorbed film is formed at a rubbing interface of the self-lubricating layer 5 close to the AF layer 3. The chemisorbed film can improve the wear resistance at the interface. Therefore, after the self-lubricating layer 5 and the AF layer 3 together form the composite coating 02, the dynamic friction coefficient of the composite coating 02 is less than or equal to 0.03. Exemplarily, the dynamic friction coefficient of the composite coating 02 is 0.02, 0.019, 0.018, 0.015, 0.01, 0.005, or the like. Therefore, the friction resistance of the composite coating 02 is improved, the failure speed and time of the composite coating 02 are reduced, and the cover plate and even the display screen can be effectively protected.

In addition, the compound having a hexagonal layered structure may further be diamond-like carbon (diamond-like carbon, DLC) and the like in addition to the rare earth fluoride having a hexagonal layered structure. The diamond-like carbon is a mixed phase including a regular tetrahedral structure of diamond and a hexagonal layered structure of graphite.

In application, the rare earth fluoride having a hexagonal layered structure may include lanthanum trifluoride (LaF₃) having a hexagonal layered structure, cerium trifluoride (CeF₃) having a hexagonal layered structure, yttrium fluoride (YF₃) having a hexagonal layered structure, and uranium trifluoride (UF₃) having a hexagonal layered structure.

In an example of the LaF₃ having a hexagonal layered structure, in the rubbing process, the LaF₃ having a hexagonal layered structure is decomposed into individual La⁺ and F⁻. La⁺ and F⁻ concentrate at the interface between the self-lubricating layer 5 and the AF layer 3 such that a chemisorbed film is formed, thereby improving the wear resistance and provide lubrication. When the friction force is removed, La⁺ and F⁻ bind to reform LaF₃. At this point, the self-lubricating layer 5 still has some wear resistance, though the wear resistance is reduced compared to its original state. Therefore, by utilizing the properties of materials having a hexagonal layered structure to form a film layer and combining it with the AF layer, the wear resistance of the surface of the composite coating 02 can be effectively improved.

In addition, referring to FIG. 6, to enable the self-lubricating layer 5 to be attached to the cover plate, the underlayer 20 is disposed between the cover plate and the self-lubricating layer 5. A material of the underlayer 20 is SiO₂ and the like having a glass structure and a composition similar to glass. In this way, the self-lubricating layer 5 can be better attached to the glass cover plate through the underlayer 20, with strong binding force. On this basis, in this embodiment of this application, in addition to the compound having a hexagonal layered structure, the self-lubricating layer 5 further includes an inorganic oxide, such as an inorganic silicon oxide or an inorganic aluminum oxide. The inorganic silicon oxide may be SiO₂ and the like. The inorganic aluminum oxide may be Al₂O₃ and the like. In this way, the material of the self-lubricating layer is similar to that of the underlayer 20, so that the self-lubricating layer 5 can well bind to the underlayer 20 through the inorganic oxide, with strong binding force.

In conclusion, the self-lubricating layer 5 can be prepared on the underlayer 20 by processes such as evaporation or magnetron sputtering, using a mixture of the rare earth fluoride having a hexagonal layered structure and/or the diamond-like carbon and the inorganic silicon oxide and/or the inorganic aluminum oxide. On the one hand, the self-lubricating layer 5 can be well attached to the underlayer 20 through the inorganic silicon oxide and/or the inorganic aluminum oxide. On the other hand, the rare earth fluoride having a hexagonal layered structure and/or the diamond-like carbon can improve the friction resistance of the composite coating 02.

It should be noted that, in an example of the LaF₃ having a hexagonal layered structure and the SiO₂, both of them are organic compounds and exist as massive crystals at room temperature. Therefore, two targets can be respectively provided. One target contains the LaF₃ having a hexagonal layered structure, and the other target contains the SiO_{2.} When the two targets need to be mixed, the two targets are subjected to magnetron sputtering to form the self-lubricating layer 5.

In actual application, a volume fraction of the compound having a hexagonal layered structure in the material of the self-lubricating layer ranges from 1% to 60%. Further, the volume fraction of the compound having a hexagonal layered structure in the material of the self-lubricating layer ranges from 1% to 40%. Furthermore, the volume fraction of the compound having a hexagonal layered structure in the material of the self-lubricating layer ranges from 10% to 25%. In this way, the self-lubricating layer 5 contains a certain proportion of inorganic oxide. Therefore, when the self-lubricating layer 5 is well attached to other film layers, as the proportion of the compound having a hexagonal layered structure in the material of the self-lubricating layer increases, the dynamic friction coefficient of the composite coating 02 is smaller, so that the composite coating 02 has better friction resistance. For example, the friction resistance of the composite coating 02 may be increased by about three times to six times compared with a common coating in the conventional technology. Exemplarily, a ratio of the compound having a hexagonal layered structure to the inorganic oxide may be 10%, 15%, 18%, 20%, 22%, 25%, or the like.

When the compound having a hexagonal layered structure and the inorganic oxide are mixed to obtain the self-lubricating layer 5, the equivalent refractive index of the mixture of the compound having a hexagonal layered structure and the inorganic oxide may range from 1.3 to 1.8. Therefore, when the composite coating is applied to a transparent glass cover plate, the combination of the composite coating and the transparent glass cover plate can present a transparent effect, and normal display of the display screen is not affected. Further, the equivalent refractive index of the mixture of the compound having a hexagonal layered structure and the inorganic oxide may range from 1.5 to 1.6. Exemplarily, the equivalent refractive index of the mixture of the compound having a hexagonal layered structure and the inorganic oxide may be 1.5, 1.52, 1.54, 1.56, 1.58, 1.6, or the like. In this case, the transmittance is very high, and a better display effect can be achieved.

Therefore, the composite coating may be configured such that a transmittance of light that is emitted from the display screen and sequentially passes through the cover plate and the composite coating is greater than 90.5%, for example, the transmittance of light that is emitted from the display screen and sequentially passes through the cover plate and the composite coating may be 90.9%, 91%, 92%, 93%, 94%, 95%, or the like. In this way, the composite coating does not affect the display effect of the display screen.

In addition, the underlayer 20 is mainly configured to improve the binding force between the cover plate and other film layers above, and therefore cannot be excessively thick. As shown in FIG. 6, along an OY direction, a thickness d2 of the underlayer 20 may range from 5 nm to 50 nm. Exemplarily, d2 may be 5 nm, 10 nm, 20 nm, 30 nm, 40 nm, 50 nm, or the like.

Along the OY direction, a thickness d5 of the self-lubricating layer 5 may range from 5 nm to 50 nm. Exemplarily, d5 may be 5 nm, 10 nm, 20 nm, 30 nm, 40 nm, 50 nm, or the like.

Along the OY direction, a thickness d3 of the AF layer 3 may range from 10 nm to 60 nm. Exemplarily, d3 may be 10 nm, 20 nm, 30 nm, 40 nm, 50 nm, 60 nm, or the like.

According to the composite coating provided in this example of this application, the compound having a hexagonal layered structure and the inorganic oxide are uniformly mixed to form the self-lubricating layer. The inorganic oxide enables the self-lubricating layer to stably bear the AF layer and the underlayer, and then the composite coating binds to the cover plate through the underlayer. On this basis, a very small part of the compound having a hexagonal layered structure is decomposed during the rubbing process such that the chemisorbed film is formed at the rubbing interface between the self-lubricating layer and the AF layer, thereby improving the friction resistance at the interface. Especially when the user rubs along a palm direction, the friction resistance is stronger, and the failure speed and time of the composite coating are reduced. Moreover, the display is not affected. Therefore, the service life of the electronic device is effectively prolonged, and the performance of the electronic device is improved.

### II. Second case

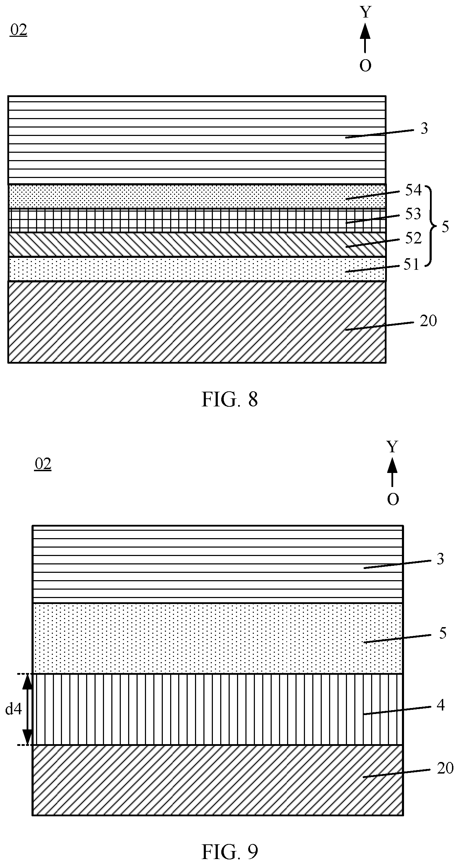

### Embodiment 2 (referring to FIG. 7 and FIG. 8)

**As an example,** the composite coating 02 shown in FIG. 7 is different from the composite coating 02 shown in FIG. 6 in that: as shown in FIG. 7, the self-lubricating layer 5 includes two sub-lubricating layers, namely a first sub-lubricating layer 51 and a second sub-lubricating layer 52 that are successively stacked on the underlayer 20.

A material of the first sub-lubricating layer 51 is the inorganic oxide, or a mixture of the compound having a hexagonal layered structure and the inorganic oxide, and a material of the second sub-lubricating layer 52 is the compound having a hexagonal layered structure, or a mixture of the compound having a hexagonal layered structure and the inorganic oxide.

Specifically, the material of the first sub-lubricating layer 51 is the inorganic oxide, and the material of the second sub-lubricating layer 52 is the compound having a hexagonal layered structure; alternatively, the material of the first sub-lubricating layer 51 is the mixture of the compound having a hexagonal layered structure and the inorganic oxide, and the material of the second sub-lubricating layer 52 is the compound having a hexagonal layered structure; alternatively, the material of the first sub-lubricating layer 51 is the inorganic oxide, and the material of the second sub-lubricating layer 52 is the mixture of the compound having a hexagonal layered structure and the inorganic oxide; and alternatively, the material of the first sub-lubricating layer 51 is the mixture of the compound having a hexagonal layered structure and the inorganic oxide, and the material of the second sub-lubricating layer 52 is the inorganic oxide.

On this basis, the compound having a hexagonal layered structure may be a rare earth fluoride having a hexagonal layered structure, diamond-like carbon, or a mixture of the rare earth fluoride having a hexagonal layered structure and the diamond-like carbon. The inorganic oxide may be SiO₂, Al₂O₃, or a mixture of SiO₂ and Al₂O₃, with no specific limitation herein.

In actual application, along the OY direction in FIG. 7, a thickness of the first sub-lubricating layer 51 ranges from 0.1 nm to 30 nm, and a thickness of the second sub-lubricating layer 52 ranges from 0.1 nm to 50 nm. Exemplarily, the thickness of the first sub-lubricating layer 51 may be 0.1 nm, 1 nm, 10 nm, 20 nm, 25 nm, 30 nm, or the like, and the thickness of the second sub-lubricating layer 52 may be 0.1 nm, 1 nm, 10 nm, 20 nm, 30 nm, 50 nm, or the like. Therefore, the first sub-lubricating layer and the second sub-lubricating layer each have a relatively small thickness, thereby reducing the risk of peeling of the first sub-lubricating layer and the second sub-lubricating layer.

In addition, equivalent refractive indexes of the first sub-lubricating layer 51 and the second sub-lubricating layer 52 each range from 1.2 to 1.9. Further, the equivalent refractive indexes of the first sub-lubricating layer 51 and the second sub-lubricating layer 52 each range from 1.3 to 1.8. Exemplarily, the equivalent refractive indexes of the first sub-lubricating layer 51 and the second sub-lubricating layer 52 may each be 1.3, 1.4, 1.5, 1.6, 1.7, 1.8, or the like. Therefore, when the composite coating is applied to a transparent glass cover plate, the combination of the composite coating and the transparent glass cover plate can present a transparent effect, and normal display of the display screen is not affected.

According to the composite coating provided in this embodiment of this application, based on the fact that the first sub-self-lubricating layer well binds to the underlayer and then well binds to the cover plate through the underlayer and that a very small part of the compound having a hexagonal layered structure in the first sub-lubricating layer and/or the second sub-self-lubricating layer is decomposed during the rubbing process such that the chemisorbed film is formed at the rubbing interface between the self-lubricating layer and the AF layer, the friction resistance at the interface is improved. Especially when the user rubs along a palm direction, the friction resistance is stronger, and the failure speed and time of the composite coating are reduced. Moreover, the display is not affected. Therefore, the service life of the electronic device is effectively prolonged, and the performance of the electronic device is improved.

**As another example,** the composite coating 02 shown in FIG. 8 is based on the composite coating 02 shown in FIG. 7 but different in that: the self-lubricating layer 5 includes four sub-lubricating layers, namely a first sub-lubricating layer 51, a second sub-lubricating layer 52, a third sub-lubricating layer 53, and a fourth sub-lubricating layer 54 that are successively stacked on the underlayer 20.

A material of the first sub-lubricating layer 51 is an inorganic oxide, or a mixture of a compound having a hexagonal layered structure and an inorganic oxide, and materials of the second sub-lubricating layer 52, the third sub-lubricating layer 53, and the fourth sub-lubricating layer 54 may each be any one of the inorganic oxide, the compound having a hexagonal layered structure, or the mixture of the compound having a hexagonal layered structure and the inorganic oxide.

### 1. The materials of two of the four sub-lubricating layers are the same:

Exemplarily, the material of the first sub-lubricating layer 51 is the same as the material of the third sub-lubricating layer 53, and the material of the second sub-lubricating layer 52 is the same as the material of the fourth sub-lubricating layer 54. Alternatively, the material of the first sub-lubricating layer 51 is the same as the material of the fourth sub-lubricating layer 54, and the material of the second sub-lubricating layer 52 is the same as the material of the third sub-lubricating layer 53.

Specifically, the material of the first sub-lubricating layer 51 and the material of the third sub-lubricating layer 53 are SiO₂, and the material of the second sub-lubricating layer 52 and the material of the fourth sub-lubricating layer 54 are LaF₃ having a hexagonal layered structure. Alternatively, the material of the first sub-lubricating layer 51 and the material of the fourth sub-lubricating layer 54 are Al₂O₃, and the material of the second sub-lubricating layer 52 and the material of the third sub-lubricating layer 53 are CeF₃ having a hexagonal layered structure.

### 2. The materials of three of the four sub-lubricating layers are the same:

Exemplarily, the material of the first sub-lubricating layer 51, the material of the second sub-lubricating layer 52, and the material of the fourth sub-lubricating layer 54 are the same. Alternatively, the material of the first sub-lubricating layer 51, the material of the third sub-lubricating layer 53, and the material of the fourth sub-lubricating layer 54 are the same.

Specifically, the material of the first sub-lubricating layer 51, the material of the second sub-lubricating layer 52, and the material of the fourth sub-lubricating layer 54 are SiO₂, and the material of the third sub-lubricating layer 53 is LaF₃ having a hexagonal layered structure. Alternatively, the material of the first sub-lubricating layer 51, the material of the third sub-lubricating layer 53, and the material of the fourth sub-lubricating layer 54 are Al₂O₃, and the material of the second sub-lubricating layer 52 is CeF₃ having a hexagonal layered structure.

### 3. The materials of three of the four sub-lubricating layers are different:

Exemplarily, the material of the first sub-lubricating layer 51 may be the same as one of the material of the second sub-lubricating layer 52, the material of the third sub-lubricating layer 53, and the material of the fourth sub-lubricating layer 54. Alternatively, the material of the first sub-lubricating layer 51 may be different from the material of the second sub-lubricating layer 52, the material of the third sub-lubricating layer 53, and the material of the fourth sub-lubricating layer 54. In this case, two of the material of the second sub-lubricating layer 52, the material of the third sub-lubricating layer 53, and the material of the fourth sub-lubricating layer 54 are the same.

Specifically, the materials of the first sub-lubricating layer 51 and the second sub-lubricating layer 52 are SiO₂, the material of the third sub-lubricating layer 53 is LaF₃ having a hexagonal layered structure, and the material of the fourth sub-lubricating layer 54 is SiO₂. Alternatively, the materials of the first sub-lubricating layer 51 and the second sub-lubricating layer 52 are SiO₂, the material of the third sub-lubricating layer 53 is LaF₃ having a hexagonal layered structure, and the material of the fourth sub-lubricating layer 54 is Al₂O₃. Alternatively, the materials of the first sub-lubricating layer 51 and the second sub-lubricating layer 52 are SiO₂, the material of the third sub-lubricating layer 53 is LaF₃ having a hexagonal layered structure, and the material of the fourth sub-lubricating layer 54 is CeF₃ having a hexagonal layered structure. Alternatively, the material of the first sub-lubricating layer 51 is SiO₂, the material of the second sub-lubricating layer 52 and the material of the fourth sub-lubricating layer 54 are LaF₃ having a hexagonal layered structure, and the material of the third sub-lubricating layer 53 is Al₂O₃. Alternatively, the material of the first sub-lubricating layer 51 is SiO₂, the material of the second sub-lubricating layer 52 and the material of the fourth sub-lubricating layer 54 are LaF₃ having a hexagonal layered structure, and the material of the third sub-lubricating layer 53 is CeF₃ having a hexagonal layered structure. Certainly, there are many similar examples, and they will not be described one by one herein.

### 4. The materials of all of the four sub-lubricating layers are different:

Specifically, the material of the first sub-lubricating layer 51 is SiO₂, the material of the second sub-lubricating layer 52 is LaF₃ having a hexagonal layered structure, the material of the third sub-lubricating layer 53 is Al₂O_{3,} and the material of the fourth sub-lubricating layer 54 is CeF₃ having a hexagonal layered structure. Alternatively, the material of the first sub-lubricating layer 51 is SiO₂, the material of the second sub-lubricating layer 52 is Al₂O₃, the material of the third sub-lubricating layer 53 is LaF₃ having a hexagonal layered structure, and the material of the fourth sub-lubricating layer 54 is CeF₃ having a hexagonal layered structure. Certainly, there are many similar examples, and they will not be described one by one herein.

It should be noted that FIG. 8 is described in an example where the quantity of the sub-lubricating layers is four. However, in this embodiment of this application, the quantity of the sub-lubricating layers may be three or more, with no specific limitation herein.

According to the composite coating provided in this embodiment of this application, based on the fact that the first sub-self-lubricating layer well binds to the underlayer and then well binds to the cover plate through the underlayer and that the three or more film layers form a stacked structure with a certain period, the sub-self-lubricating layers each have a small thickness and do not peel off, and the self-lubricating layer of the lamination can significantly improve the friction resistance of the composite coating, so that the failure speed and time of the composite coating are reduced. Moreover, the display is not affected. Therefore, the service life of the electronic device is effectively prolonged, and the performance of the electronic device is improved.

### III. Third case

### Embodiment 3 (referring to FIG. 9 to FIG. 11)

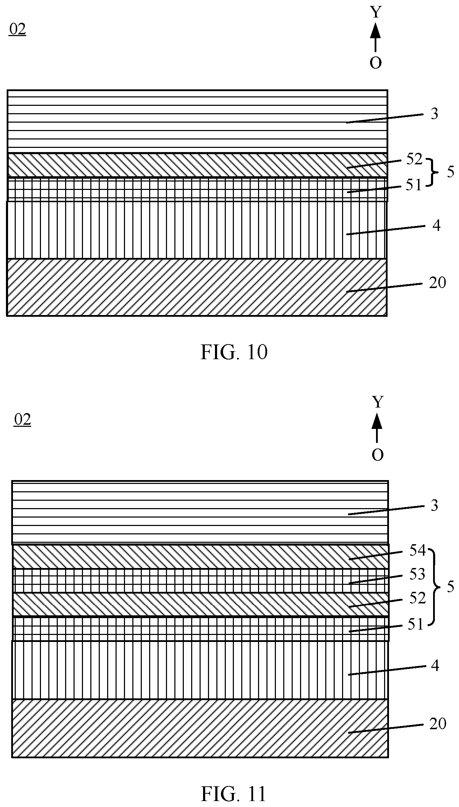

The composite coating 02 shown in FIG. 9 is based on the composite coating 02 shown in FIG. 6, the composite coating 02 shown in FIG. 10 is based on the composite coating 02 shown in FIG. 7, and the composite coating 02 shown in FIG. 11 is based on the composite coating 02 shown in FIG. 8. The difference lies in that: a scratch-resistant layer 4 is additionally disposed between the underlayer 20 and the self-lubricating layer 5.

It should be understood that the scratch-resistant layer 4 has some characteristics. For example, an equivalent refractive index of the scratch-resistant layer 4 may range from 1.30 to 1.90. Further, the equivalent refractive index may range from 1.44 to 1.6. A transmittance of the scratch-resistant layer 4 may be greater than or equal to 91%. Exemplarily, the equivalent refractive index of the scratch-resistant layer 4 may be 1.44, 1.48, 1.50, 1.55, 1.58, 1.6, or the like, and the transmittance of the scratch-resistant layer may be 91%, 92%, 93%, 94%, 95%, 96%, or the like. Therefore, an optical refractive index of the scratch-resistant layer may be close to that of a transparent glass cover plate. In this way, after the scratch-resistant layer is added, the composite coating also does not affect the display effect.

In actual application, the scratch-resistant layer 4 may include a hard film and an antireflective film that are successively stacked, or the scratch-resistant layer may include a primer film, a hard film, and an antireflective film that are successively stacked.

A material of the primer film may be SiO₂ and the like, and is mainly configured to improve the binding force between the hard film and the underlayer 20.

A material of the hard film may include at least one of a material having a refractive index of greater than 1.7 and a material having a refractive index of less than 1.5. Here, the high-hardness material having a refractive index of greater than 1.6 here includes tantalum pentoxide (Ta₂O₅), silicon nitride (Si₃N₄), nitrogen carbide (SiC), aluminum nitride (AlN), titanium dioxide (TiO₂), and the like, and the material having a refractive index of less than 1.52 includes SiO₂, and the like. A thickness of the hard film may range from 500 nm to 4000 nm. Exemplarily, the thickness of the hard film may be 500 nm, 1000 nm, 2000 nm, 3000 nm, 3500 nm, 4000 nm, or the like.

A material of the antireflective film may be a material having a refractive index of less than 1.52, for example, SiO₂. A thickness of the antireflective film may range from 20 nm to 100 nm. Exemplarily, the thickness of the antireflective film may be 20 nm, 30 nm, 50 nm, 60 nm, 80 nm, 100 nm, or the like.

Therefore, the scratch-resistant layer 4 may form an optical film-based stacked structure using a single layer or a mixed film layer having different refractive indexes, combining high hardness for scratch resistance with high transmittance for color-free functionality.

Based on the prior art, the scratch-resistant layer 4 is typically relatively thick, leading to large roughness and poor smoothness on its surface. Therefore, the friction resistance is increased. Consequently, compared with the composite coating where no scratch-resistant layer 4 is provided, the composite coating 02 with the self-lubricating layer 5 attached to the scratch-resistant layer 4 has a slightly reduced friction effect, but higher scratch resistance. Along the OY direction in FIG. 9, a thickness d4 of the scratch-resistant layer 4 may range from 500 nm to 4000 nm. Exemplarily, d4 may be 500 nm, 1000 nm, 2000 nm, 3000 nm, 3500 nm, 4000 nm, or the like.

In actual application, the scratch-resistant layer may be formed by electron beam evaporation, silicon target sputtering, and the like.

After the scratch-resistant layer 4 is formed in the composite coating 02, the scratch-resistant layer 4 may be configured to enable the Vickers hardness of the composite coating 02 to be greater than or equal to 1400 HV. Exemplarily, the scratch-resistant layer 4 is configured to enable the Vickers hardness of the composite coating 02 to be 1400 HV, 1500 HV, 1600 HV, 1700 HV, 1800 HV, 1900 HV, or the like. Therefore, the scratch-resistant layer has good hardness and scratch-resistant effect.

The scratch-resistant layer 4 may be configured to enable the Mohs hardness of the composite coating 02 to be greater than or equal to 7. Exemplarily, the scratch-resistant layer 4 may be configured to enable the Mohs hardness of the composite coating 02 to be 7, 8, 9, 10, 11, 12, or the like. Therefore, the scratch-resistant layer has good hardness and scratch-resistant effect.

According to the composite coating provided in this embodiment of this application, the self-lubricating layer improves the friction resistance of the composite coating and reduces the failure speed and time of the composite coating without affecting the display. On this basis, because the scratch-resistant layer can improve the hardness of the composite coating, the composite coating has stronger scoring resistance and excellent anti-puncture and scratch-resistant performance after contacting a hard object, thereby further improving the performance of the composite coating.

A vertical single-chamber magnetron sputtering system is employed below to form the underlayer using a pure silicon target.

The scratch-resistant layer is formed below using a silicon target or an aluminum target.

The self-lubricating layer, the first sub-lubricating layer, the second sub-lubricating layer, the third sub-lubricating layer, and the fourth sub-lubricating layer are respectively formed using LaF₃ having a hexagonal layered structure and SiO₂ as the targets.

Before deposition, a glass substrate is cleaned using deionized water. Then, the glass substrate is fixed to a bearing plate of the deposition system, and the system is evacuated to less than 3E⁻³ pa by a mechanical pump and a Roots pump system. Next, the glass substrate is subjected to plasma cleaning using pure Argon (Ar), with a power ranging from 1 kw to 4 kw. Finally, different film layer materials are sputtered sequentially to form different layers or films.

To verify the inventive step of the embodiments of this application, the samples obtained in Embodiments 1 to 8 and Comparative Embodiments 1 to 2 were tested as follows.

The test methods are as follows:

### 1. Dynamic friction coefficient test:

The test instrument may be MXD-02 or another device of a same type and a same standard. The test medium was paper for an Asone weighing balance, model 1-4560-02.

### Test steps:

S1. The load of the test instrument was set to 200 g+/-20 g.

S2. The sample was fixed on the test instrument, and the test instrument was started. The loaded solid was moved to generate a value.

The test speed may be 100 mm/min, and the test distance may be 50 mm.

S3. After the composite coating was removed from the sample, the test surface of the glass was wiped with a dust-free cloth dipped with alcohol for five times and blown by an ionizing air blower for 2 min.

S4. Each sample was tested for three times.

### 2. Eraser rubbing limit test:

The test instruments may be a Tianyi instrument T-NM-50HA and an alcohol abrasion tester. The test media may be a minoan eraser and a standard weight.

### Test steps:

S1. The test surface of a sample was subjected to visual inspection to check for any abnormalities such as scratches, scuffs, bubbles, cracks, peeling, or scores.

S2. The test surface of the sample was wiped with a dust-free cloth dipped with alcohol for five times and blown by an ionizing air blower for 2 min.

S3. The test surface of the sample was tested for an initial contact angle. Five test points were evenly selected.

S4. The minoan eraser was used. The weight was set to 1000 g. The quantity of times of reciprocation was set to 3000 for each cycle. The speed was 40 cycles/min. The test stroke was to 40 mm.

S5. Three points were selected in the area rubbed by eraser (the rubbed area was evenly divided into five parts, three of which were taken for the test) for the contact angle test.

It should be noted that the eraser rubbing limit refers to using an eraser to rub the composite coating to simulate rubbing experience of human hands. Usually, eraser rubbing for about 3000 times is equivalent to regular use for about three months. Under the load of 1000 g, the quantity of the times of eraser rubbing was > 18000, and the service life of the anti-fingerprint layer on the surface was improved by six times at most.

### 3. Vickers hardness test:

The test instrument was an Anton Paar Step-700 + NHT3+MCT3 indentation and scratch instrument device. The test medium was a diamond indenter.

### Test steps:

S1. Before testing, the test surface of a sample was subjected to visual inspection to check for abnormalities, discoloration, bubbles, cracks, peeling, and the like.

S2. The sample was placed flat on the stage, and the height was adjusted. The sample was focused under a 100x microscope until the surface of the sample is clearly seen. The test was performed under the pressure of 18 mN and the pressure was hold for 10 s.

S3. The HVIT value was calculated based on the formula HV = F/A, where A is the projection area of the indentation.

S4. Six positions were tested for each sample. The maximum value and the minimum value were removed to calculate the average.

### 4. Optical performance test:

The test instrument was a Konica CM3600A test device or another device of a same type and with same specifications. The light source was a D65 light source. The observation angle was 10°.

### Test steps:

S1. The transmittance of the view area was tested: At a wavelength of 550 nm, the view area of the front side of the sample was tested.

S2. The reflectivity of the view area was tested: At a wavelength of 550 nm, the view area of the front side of the sample was tested.

### 5. Cross-cut test:

The test media were a water bath and a cross-cut tester.

### Test steps:

S1. Before testing, the test surface of a sample was subjected to visual inspection to check for abnormalities such as scratches, scuffs, peeling, and the like.

S2. Purified water was heated to 80°C±2°C and kept in this state.

S3. The sample was completely immersed in hot water, with the surface with ink facing upward. During the test, superposition of the sample should be avoided. The sample was taken out after being boiled for 30 min. After being allowed to stand at an ordinary temperature for 2 h, the sample was cooled to room temperature.

S4. The surface of the composite coating of the sample was inspected for abnormalities and then subjected to adhesion testing according to the methods in Table 1 below. The test locations need to cover all the ink area within the aperture.

Adhesion testing was performed for different aperture shapes according to the cross-cut tests in Table 1 below:

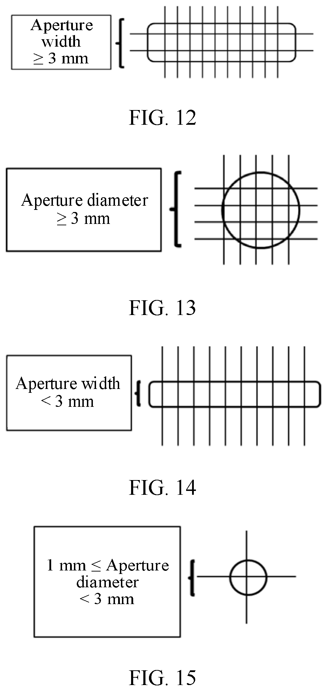

It should be noted that reference may also be made to FIG. 12 and FIG. 13 for the cross-cut test classified as 3 mm ≤ ink width < 12 mm.

Reference may be made to FIG. 14 and FIG. 15 for the cross-cut test classified as 1 mm ≤ ink width < 3 mm.

**Table 1**

| Classification | Description of cross-cut test |
|---|---|
| 3 mm ≤ ink width < 12 mm | Make N (ink width-2 mm, rounded down) cuts parallel to the long edge, and ten cuts perpendicular to the long edge, with 1 mm spacing between the cuts. |
| 1 mm ≤ ink width < 3 mm | If the shape of the aperture is rectangular, make N (ink width-2 mm, rounded down) cuts perpendicular to the long edge of the aperture, with 1 mm spacing between cuts. |
| | If the shape of the aperture is circular, make cross cuts with the center of circle of the aperture as the reference point. |
| ink width < 1 mm | Skip the cross-cut, and directly apply a tape to the surface and then remove the tape. |

In addition, the results of the performance test on the composite coating are shown in Table 2:

**Table 2**

| Solution | Composite coating structure | Volume fraction of LaF₃ in the mixture of LaF₃ and SiO₂ (Vol%) | Thicknesses of LaF₃ layer and SiO₂ layer | Dynamic friction coefficient (250 g load) | Eraser rubbing limit (1000 g load @ WC > 105°) |
|---|---|---|---|---|---|
| Embodiment 1 | Underlayer/self-lubricating layer/AF layer, where the self-lubricating layer is formed by mixing LaF₃ and SiO₂ | 10% | / | 0.015 | 28000 times |
| Embodiment 2 | Underlayer/scratch-resistant layer/self-lubricating layer/AF layer, where the self-lubricating layer is formed by mixing LaF₃ and SiO₂ | 10% | / | 0.03 | 7500 times |
| Embodiment 3 | Underlayer/scratch-resistant layer/self-lubricating layer/AF layer, where the self-lubricating layer is formed by mixing LaF₃ and SiO₂ | 15% | / | 0.025 | 13000 times |
| Embodiment 4 | Underlayer/scratch-resistant layer/self-lubricating layer/AF layer, where the self-lubricating layer is formed by mixing LaF₃ and SiO₂ | 20% | / | 0.016 | 20000 times |
| Embodiment 5 | Underlayer/scratch-resistant layer/self-lubricating layer/AF layer, where the self-lubricating layer is formed by mixing LaF₃ and SiO₂ | 25% | / | 0.016 | 25000 times |
| Embodiment 6 | Underlayer/scratch-resistant layer/self-lubricating layer/AF layer, where the self-lubricating layer includes a SiO₂ layer and a LaF₃ layer | / | Both 0.1 nm | 0.024 | 8000 times |
| Embodiment 7 | Underlayer/scratch-resistant layer/self-lubricating layer/AF layer, where the self-lubricating layer includes a SiO₂ layer and a LaF₃ layer | / | Both 10 nm | 0.016 | 18000 times |
| Embodiment 8 | Underlayer/scratch-resistant layer/self-lubricating layer/AF layer, where the self-lubricating layer includes a SiO₂ layer and a LaF₃ layer | / | Both 30 nm | 0.014 | 20000 times |
| Comparative Embodiment 1 | Underlayer/scratch-resistant layer/AF layer | / | | 0.045 | <1500 |
| Comparative Embodiment 2 | Underlayer/scratch-resistant layer/AF layer | / | | 0.033 | 3000 |

It can be seen from Table 2 that, compared with Comparative Embodiments 1 to 2, the composite coatings in Embodiments 1 to 8 of this application had the self-lubricating layer, so the dynamic friction coefficients were smaller, and the eraser rubbing limits were higher. That is, the composite coatings provided in the embodiments of this application had better friction resistance.

In terms of Embodiment 1 of this application and Embodiment 2 of this application, when the materials and fractions of the self-lubricating layers in the composite coatings were the same, compared with the composite coating where the scratch-resistant layer was additionally provided, the composite coating only with the self-lubricating layer had a smaller dynamic friction coefficient and a lower eraser rubbing limit. That is, the composite coating only with the self-lubricating layer had better friction resistance.

In Embodiments 1 to 4 of this application, only a ratio of LaF₃ to SiO₂ in the composite coating was changed. When the ratio of LaF₃ to SiO₂ ranged from 10% to 25%, as the fraction of LaF₃ increased, the dynamic friction coefficient of the composite coating decreased, and the eraser rubbing limit increased. That is, the friction resistance of the composite coating was improved.

It should be noted that the optical performance test showed that the reflectivity of coated glass was less than 8.6% and the transmittance of coated glass was greater than 90.5% at the optical wavelength ranging from 380 nm to 780 nm.

The cross-cut test showed that there was no peeling on the coated glass, and the adhesion was greater than or equal to 4B.

The coated glass prepared according to the embodiments of this application have scoring resistance under normal usage conditions and anti-fingerprint effectiveness of more than 18 months.

It should be understood that the following are intended to help a person skilled in the art to better understand the embodiments of this application, but not to limit the scope of the embodiments of this application. A person skilled in the art may obviously perform various equivalent modifications or changes based on the foregoing examples. Alternatively, the foregoing any two or more embodiments may be combined. Solutions of such modifications, changes, or combination also fall within the scope of the embodiments of this application.

It should be further understood that, the foregoing descriptions of the embodiments of this application focus on emphasizing differences between the embodiments. For the same or similar description not mentioned, reference may be made to each other. For brevity, details are not described herein again.

It should be further understood that, the division of manners, cases, and categories in the embodiments of this application is merely for ease of description, and should not be construed as a particular limitation. Features in various manners, categories, cases, and the embodiments can be combined without contradiction.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

It should be finally noted that the foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. A composite coating, applied to an electronic device, wherein the electronic device further comprises a cover plate, and the composite coating is disposed on a light exit side of the cover plate; and
the composite coating comprises a self-lubricating layer, the self-lubricating layer is attached to the cover plate, a material of the self-lubricating layer comprises a compound having a hexagonal layered structure and an inorganic oxide, and an equivalent refractive index of the self-lubricating layer ranges from 1.3 to 1.8.

2. The composite coating according to claim 1, wherein the compound having a hexagonal layered structure comprises at least one of diamond-like carbon and a rare earth fluoride having a hexagonal layered structure.

3. The composite coating according to claim 1 or 2, wherein the composite coating further comprises an anti-fingerprint layer, and the anti-fingerprint layer is disposed on one side of the self-lubricating layer away from the cover plate; and
a dynamic friction coefficient of the composite coating is less than or equal to 0.03.

4. The composite coating according to any one of claims 1 to 3, wherein the self-lubricating layer comprises at least one sub-lubricating layer, and a material of each sub-lubricating layer comprises a mixture of the compound having a hexagonal layered structure and the inorganic oxide.

5. The composite coating according to claim 4, wherein a volume fraction of the compound having a hexagonal layered structure in the material of the sub-lubricating layer ranges from 1% to 60%.

6. The composite coating according to any one of claims 1 to 3, wherein the self-lubricating layer comprises at least a first sub-lubricating layer and a second sub-lubricating layer, and the first sub-lubricating layer is disposed between the cover plate and the second sub-lubricating layer;
a material of the first sub-lubricating layer comprises any one of the inorganic oxide, and a mixture of the compound having a hexagonal layered structure and the inorganic oxide; and
a material of the second sub-lubricating layer comprises any one of the compound having a hexagonal layered structure, and a mixture of the compound having a hexagonal layered structure and the inorganic oxide.

7. The composite coating according to claim 6, wherein the first sub-lubricating layer and the second sub-lubricating layer are alternately disposed along a direction perpendicular to the cover plate.

8. The composite coating according to claim 6, wherein the self-lubricating layer further comprises at least a third sub-lubricating layer, and the third sub-lubricating layer is disposed on one side of the second sub-lubricating layer away from the first sub-lubricating layer; and
a material of the third sub-lubricating layer comprises any one of the inorganic oxide, the compound having a hexagonal layered structure, and a mixture of the compound having a hexagonal layered structure and the inorganic oxide.

9. The composite coating according to claim 8, wherein at least two of the first sub-lubricating layer, the second sub-lubricating layer, and the third sub-lubricating layer are alternately disposed along a direction perpendicular to the cover plate.

10. The composite coating according to any one of claims 1 to 9, wherein the composite coating further comprises an underlayer, and the underlayer is disposed between the cover plate and the self-lubricating layer and configured to attach the self-lubricating layer to the cover plate.

11. The composite coating according to claim 10, wherein the composite coating further comprises a scratch-resistant layer, and the scratch-resistant layer is disposed between the underlayer and the self-lubricating layer; wherein
a Vickers hardness of the composite coating is greater than or equal to 1400 HV; and/or
a Mohs hardness of the composite coating is greater than or equal to 7.

12. The composite coating according to claim 2, wherein the rare earth fluoride having a hexagonal layered structure comprises at least one of lanthanum trifluoride having a hexagonal layered structure, cerium trifluoride having a hexagonal layered structure, yttrium fluoride having a hexagonal layered structure, and uranium trifluoride having a hexagonal layered structure.

13. The composite coating according to any one of claims 1 to 12, wherein the inorganic oxide comprises at least one of an inorganic silicon oxide and an inorganic aluminum oxide.

14. A display module, comprising a display screen, a cover plate, and the composite coating according to any one of claims 1 to 13, wherein the cover plate is located on the light exit side of the display screen, and the composite coating is disposed on one side of the cover plate away from the display screen.

15. An electronic device, comprising the display module according to claim 14.
